# FASCICULE DE BREVET EUROPEEN

(11) **EP 4 586 297 B1**
(45) Date de publication et mention de la délivrance du brevet: **12.08.2026**
(21) Numéro de dépôt: 25151178.8
(22) Date de dépôt: 10.01.2025
(51) Int. Cl.: H01H 9/54

(54) **DISPOSITIF DE PROTECTION ÉLECTRIQUE ET PROCÉDÉ DE CONTRÔLE ASSOCIÉ**
ELEKTRISCHE SCHUTZVORRICHTUNG UND STEUERUNGSVERFAHREN DAFÜR
ELECTRICAL PROTECTION DEVICE AND ASSOCIATED CONTROL METHOD

(30) Priorité: 12.01.2024 FR 2400303
(43) Date de publication de la demande: 16.07.2025
(73) Titulaire: SCHNEIDER ELECTRIC INDUSTRIES SAS, 92500 Rueil-Malmaison (FR)
(72) Inventeur: ORBAN, Rémy, 38410 Saint Martin d'Uriage (FR); HERAUD, Sébastien, 38100 Grenoble (FR)
(74) Mandataire: Lavoix

(56) Documents cités:
- FR-A1- 2 952 470
- US-A1- 2020 185 163
- US-A1- 2021 367 446

## Description

La présente invention concerne un dispositif de protection électrique et un procédé de contrôle associé.

Les dispositifs de protection électrique, comme les disjoncteurs électromécaniques ou les dispositifs de protection hybrides intégrant un interrupteur mécanique, un interrupteur statique et un élément limiteur de tension, sont généralement commandés en ouverture en fonction de conditions fixes. Par exemple, FR2952470 décrit un dispositif de protection électrique comprenant un interrupteur statique et un interrupteur à contact mécanique, dans lequel l'interrupteur à contact mécanique est commandé en ouverture lorsque le courant électrique circulant dans le dispositif ou lorsqu'une vitesse de croissance du courant, c'est-à-dire une dérivée par rapport au temps de l'intensité du courant, dépasse un seuil fixe prédéterminé. WO2015028634A1 décrit un dispositif de protection électrique comprenant un interrupteur de bypass, un interrupteur statique et un interrupteur d'isolation galvanique. L'interrupteur de bypass est commandé en ouverture si une valeur instantanée d'un courant circulant dans le dispositif, une vitesse de croissance du courant ou une valeur efficace du courant est supérieure à un seuil respectif prédéterminé, ou si la somme entre la valeur instantanée et la vitesse de croissance du courant est supérieure à un seuil prédéterminé. De plus, une ouverture de l'interrupteur statique est commandée lorsqu'un délai fixe est écoulé, ce délai étant mesuré à partir de l'ouverture de l'interrupteur de bypass.

Cependant, les défauts électriques pouvant conduire à un déclenchement du dispositif de protection hybride sont variés, ce qui conduit à choisir le délai fixe entre l'ouverture de l'interrupteur de bypass et l'ouverture de l'interrupteur statique soit de manière à assurer l'intégrité du dispositif de protection, conduisant à un surdimensionnement, soit de manière à optimiser le temps de réponse, ce qui peut engendrer des risques de dysfonctionnement du dispositif et donc un risque de défaillance du dispositif de protection.

Le but de l'invention est alors de proposer un dispositif de protection électrique plus fiable, et permettant une détection efficace et sécure.

A cet effet, l'invention a pour objet un dispositif de protection électrique selon la revendication 1.

Grâce à l'invention, il est possible d'interrompre le courant en cas de court-circuit de manière efficace et sécure. En effet, le basculement de l'interrupteur statique en configuration d'isolement est réalisé en fonction de l'intensité et de la dérivée par rapport au temps de l'intensité, et non pas après l'écoulement d'une durée fixe. Ainsi, il est possible d'ajuster une durée entre le basculement de l'interrupteur mécanique en configuration ouverte et le basculement de l'interrupteur statique en configuration d'isolement en fonction du type de défaut. Cela permet de réduire la durée entre le basculement de l'interrupteur mécanique en configuration ouverte et le basculement de l'interrupteur statique en configuration d'isolement au minimum sans risquer, d'une part, la réapparition d'un arc électrique entre les contacts de l'interrupteur mécanique, autrement dit un claquage diélectrique entre les contacts de l'interrupteur mécanique, causé par le basculement de l'interrupteur statique en configuration d'isolement de manière trop hâtive, ni, d'autre part, un endommagement de l'interrupteur statique, causé par le basculement de l'interrupteur statique en configuration d'isolement de manière trop tardive.

Suivant d'autres aspects avantageux de l'invention, le dispositif est selon l'une des revendications 2 à 9.

L'invention concerne également un procédé de commande selon la revendication 10.

De façon avantageuse, le procédé est selon la revendication 11.

L'invention apparaîtra plus clairement à la lecture de la description qui va suivre, donnée uniquement à titre d'exemple non limitatif, et faite en référence aux dessins dans lesquels :
- [Fig. 1] la figure 1 est un schéma d'un circuit électrique comprenant un dispositif de protection électrique conforme à l'invention ;
- [Fig.2] la figure 2 est une représentation graphique d'un courant circulant dans un dispositif de protection électrique conforme à l'invention;
- [Fig. 3] la figure 3 est une représentation graphique des conditions de détection d'un court-circuit dans un dispositif de protection électrique conforme à l'invention;
- [Fig. 4] la figure 4 est une représentation graphique d'un temps d'isolement d'un dispositif de protection électrique conforme à l'invention, en fonction d'une intensité de transfert ;
- [Fig. 5] la figure 5 est un logigramme d'un premier procédé de commande conforme à l'invention et mis en œuvre par le dispositif selon l'invention ; et
- [Fig. 6] la figure 6 est un logigramme d'un deuxième procédé de commande conforme à l'invention et mis en œuvre par le dispositif selon l'invention.

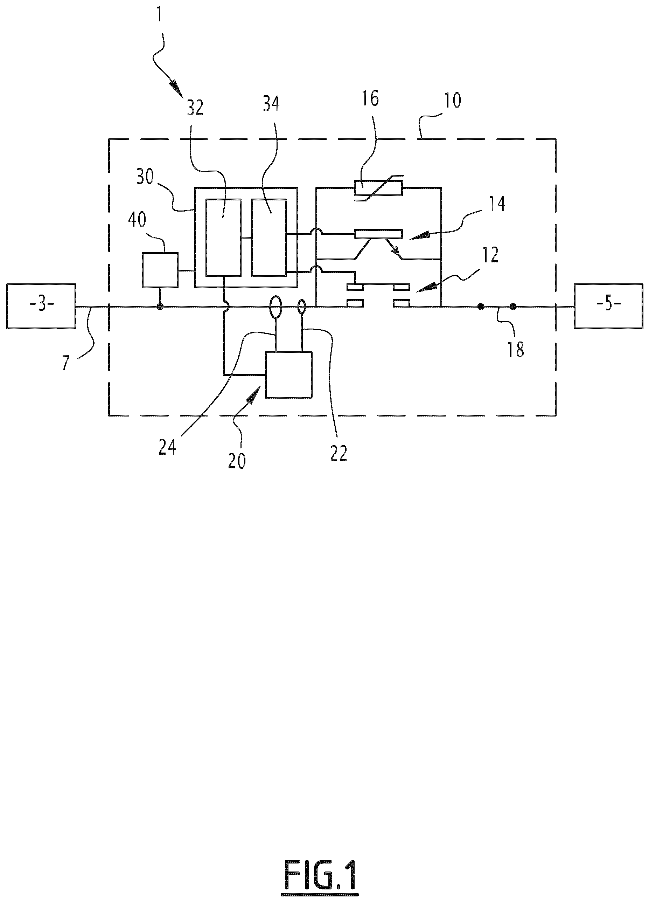

La figure 1 est un schéma d'un circuit électrique 1 comprenant une source 3 et une charge 5, électriquement reliées entre elles par un conducteur de phase 7. La source 3 fournit de l'électricité et est, par exemple, un générateur électrique ou un réseau électrique, par exemple un réseau électrique de secteur. La charge 5 est un appareil consommant de l'électricité, comme un appareil électrique domestique, un équipement industriel comme un moteur électrique, ou encore un serveur. Ainsi, un courant électrique, dit simplement courant par la suite, circule entre la source 3 et la charge 5 à travers le conducteur de phase 7.

Le courant est un courant alternatif, par exemple monophasé ou multiphasé, ou un courant continu.

Le circuit électrique 1 comprend également un dispositif de protection électrique 10, également appelé dispositif, connecté entre la source 3 et la charge 5. Le dispositif 10 est configuré pour basculer entre une configuration armée, dans laquelle le dispositif 10 conduit le courant circulant entre la source 3 et la charge 5, et une configuration déclenchée, dans laquelle le dispositif 10 isole électriquement la source 3 de la charge 5.

Le dispositif 10 comprend un interrupteur mécanique 12, un interrupteur statique 14 et un élément de limitation de tension 16.

L'interrupteur mécanique 12 est également connu sous le nom d'interrupteur de bypass, ou d'interrupteur mécanique rapide, également appelé FMS (de l'anglais *Fast Mechanical Switch*)*.* L'interrupteur mécanique 12 est connecté en série entre la source 3 et la charge 5 et est configuré pour basculer entre une configuration fermée, dans laquelle il conduit le courant circulant entre la source 3 et la charge 5, et une configuration ouverte, dans laquelle il ne conduit pas le courant. Dans la figure 1, l'interrupteur mécanique 12 est représenté en configuration ouverte.

L'interrupteur statique 14 comprend au moins un élément semi-conducteur commandable en commutation, et comprend par exemple au moins un transistor, comme par exemple un transistor à effet de champ, également appelé FET (de l'anglais *Field Effect Transistor*), un transistor à effet de champ à grille isolée, également appelé MOSFET (de l'anglais *Metal Oxide Semiconductor Field Effect Transistor*), un transistor bipolaire, ou une combinaison de ces différents éléments semi-conducteurs. L'interrupteur statique 14 est connecté en parallèle de l'interrupteur mécanique 12. L'interrupteur statique 14 est configuré pour basculer entre une configuration de conduction, dans laquelle l'interrupteur statique 14 conduit le courant circulant entre la source 3 et la charge 5, et une configuration d'isolement, dans laquelle il ne conduit pas le courant.

L'élément de limitation de tension 16 est, par exemple, une varistance et est connecté en parallèle des interrupteurs mécanique 12 et statique 14. L'élément de limitation de tension 16 est configuré pour, lorsque l'interrupteur mécanique 12 est en configuration ouverte et l'interrupteur statique 14 est en configuration d'isolement, dissiper une énergie contenue dans le circuit 1, autrement dit pour couper le courant électrique.

Le dispositif comprend en outre un sectionneur 18, connecté entre la source 3 et la charge 5, en série de l'interrupteur mécanique 12. L'interrupteur statique 14 n'est pas connecté en parallèle du sectionneur 18. Dans la figure 1, le sectionneur 18 est connecté en aval de l'interrupteur mécanique 12, c'est-à-dire entre l'interrupteur mécanique 12 et la charge. En variante non représentée, le sectionneur 18 est connecté en amont de l'interrupteur mécanique 12, c'est-à-dire entre la source 3 et l'interrupteur mécanique 12.

Le sectionneur 18 est configuré pour basculer entre une configuration fermée dans laquelle le sectionneur 18 conduit le courant et une configuration ouverte dans laquelle le sectionneur 18 ne conduit pas le courant. Le sectionneur 18 est configuré pour basculer en configuration ouverte lorsque le courant est interrompu entre la source 3 et la charge 5, autrement dit lorsqu'aucun courant ne circule entre la source 3 et la charge 5 dans le conducteur de phase 7.

Le dispositif 10 comprend en outre un module d'acquisition 20. Le module d'acquisition 20 comprend un capteur d'intensité 22, configuré pour mesurer une intensité I du courant circulant dans le dispositif 10. L'intensité I est une intensité instantanée, par opposition à une intensité efficace ou moyenne, et correspond à la somme des intensités I₁₂, I₁₄ et I₁₆ des courants circulant respectivement dans l'interrupteur mécanique 12, l'interrupteur statique 14 et dans l'élément limiteur de tension 16. Avantageusement, l'intensité I est mesurée en continu.

Avantageusement, le dispositif 10 comprend un capteur 24 de dérivée l' par rapport au temps de l'intensité I, également appelé capteur de dérivée de l'intensité 24. Le capteur de dérivée de l'intensité 24 est avantageusement un tore ou une bobine de Rogowski et est configuré pour mesurer la dérivée l' par rapport au temps de l'intensité I, appelée par la suite dérivée I'. Avantageusement, la dérivée I' est mesurée en continu.

En variante non représentée, le module d'acquisition 20 comprend un sous-module de dérivation, configuré pour déterminer la dérivée I' à partir de l'intensité I mesurée par le capteur d'intensité 22.

Le dispositif 10 comprend en outre une unité de contrôle électronique 30, connectée au module d'acquisition 20 et aux interrupteurs mécanique 12 et statique 14.

L'unité de contrôle électronique 30 comprend avantageusement un module de détermination 32, connecté au module d'acquisition 20, et un module de commande 34, connecté au module de détermination 32 et à l'interrupteur statique 14. Dans l'exemple de la figure 1, le module de détermination 32 et le module de commande 34 sont chacun réalisés sous la forme d'un logiciel, exécutable par un processeur non représenté, inclus dans l'unité de contrôle électronique 30. En variante non représentée, le module de détermination 32 et le module de commande 34 sont réalisés chacun sous la forme d'un composant logique programmable, tel qu'un FPGA (de l'anglais *Field Programmable Gate Array*), un circuit intégré, tel qu'un ASIC (de l'anglais *Application Specific Integrated Circuit*), ou encore, un microcontrôleur.

Le dispositif 10 comprend en outre une unité d'alimentation 40, connectée au conducteur de phase 7 et à l'unité électronique 30. L'unité d'alimentation 40 est configurée pour alimenter électriquement l'unité électronique 30 à partir du courant circulant dans le conducteur de phase 7. En variante, l'unité d'alimentation 40 est connectée à un circuit électrique séparé, non relié au conducteur de phase 7.

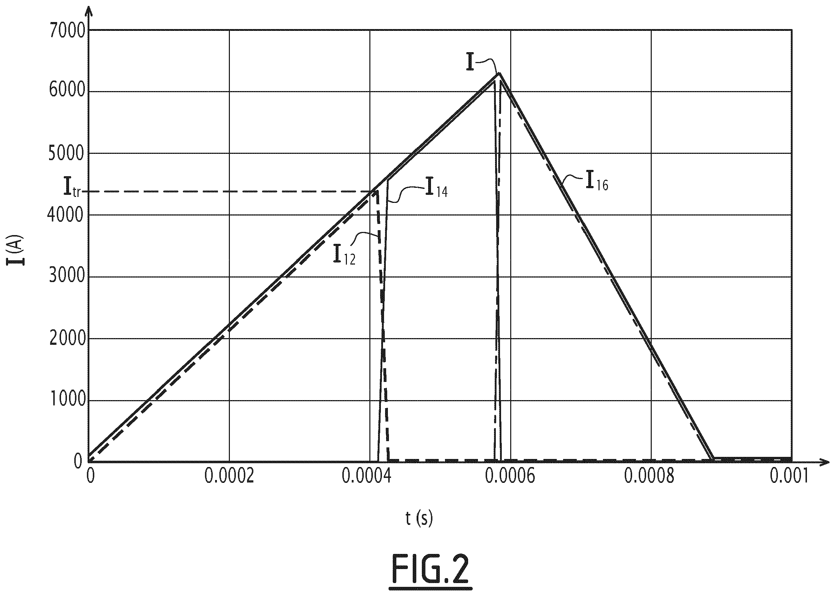

La figure 2 est une représentation graphique de l'évolution de l'intensité I dans le dispositif 10 lors d'un court-circuit. Avant le court-circuit, l'interrupteur mécanique 12 est en configuration fermée et l'interrupteur statique 14 en configuration de conduction ou d'isolement. Le courant circule dans l'interrupteur mécanique 12.

A l'apparition du court-circuit, l'intensité I augmente et donc l'intensité I₁₂ du courant circulant dans l'interrupteur mécanique 12 augmente jusqu'à atteindre un maximum, appelé intensité de transfert Iₜᵣ. Lorsque l'interrupteur mécanique 12 bascule dans la configuration ouverte, le courant est dévié de l'interrupteur mécanique vers l'interrupteur statique 14 : l'intensité I₁₂ diminue de l'intensité de transfert Iₜᵣ jusqu'à devenir nulle et l'intensité I₁₄ circulant dans l'interrupteur statique augmente jusqu'à devenir égale à l'intensité I qui continue d'augmenter. Enfin, lorsque l'interrupteur statique 14 est commandé en configuration d'isolement, l'interrupteur mécanique 12 étant toujours en configuration ouverte, le courant est dévié dans l'élément de limitation de tension 16 : l'intensité I₁₆ du courant circulant dans l'élément de limitation de tension 16 augmente jusqu'à devenir égale à I, qui ensuite diminue jusqu'à devenir nulle à cause de la présence de l'élément de limitation de tension 16.

Lors d'un court-circuit, une valeur de l'intensité juste avant que le dispositif 10 ne bascule en configuration déclenchée est appelée intensité pic. Afin de ne pas endommager le dispositif 10, l'intensité pic ne doit pas dépasser une valeur d'intensité pic maximale Iₚₘₐₓ, par exemple égale à 10000 A. La mesure de l'intensité I et de la dérivée I' permet au module de détermination 32 de déterminer une première valeur d'intensité pic estimée Iₚ₁, selon la formule :${I}_{p 1} = I + I ' \times {T}_{d}$

T_{d} est une durée totale de déclenchement estimée ; il s'agit d'une estimation d'une durée s'écoulant entre un moment où le module de commande 34 émet une commande de basculement de l'interrupteur mécanique 12 en configuration ouverte et un moment où le dispositif 10 bascule effectivement en configuration déclenchée, autrement dit le moment ou l'interrupteur statique 14 bascule effectivement en position d'isolement. La durée totale de déclenchement estimée T_{d} est, par exemple, programmée à l'avance par construction du dispositif 10. Elle peut, par exemple, être fixée comme étant inférieure ou égale à 100µs.

Si la première valeur d'intensité pic estimée Iₚ₁ est supérieure à un seuil d'intensité pic Iₜₕ, alors le module de commande 34 commande l'interrupteur mécanique 12 en configuration ouverte. Le seuil d'intensité pic Iₜₕ est par exemple choisi comme étant égal à 80% de la valeur d'intensité pic maximale Iₚₘₐₓ. Le seuil d'intensité pic Iₜₕ est par exemple inférieur à 10000A, de préférence inférieur à 6000A, de préférence inférieur à 5000A, de préférence encore, égal à 4500A. Une durée totale de déclenchement du dispositif, entre une détection du court-circuit et le basculement de l'interrupteur statique 14 en configuration d'isolement est avantageusement inférieure à 1ms, avantageusement l'ordre de quelques centaines de microsecondes, par exemple égal à 800µs.

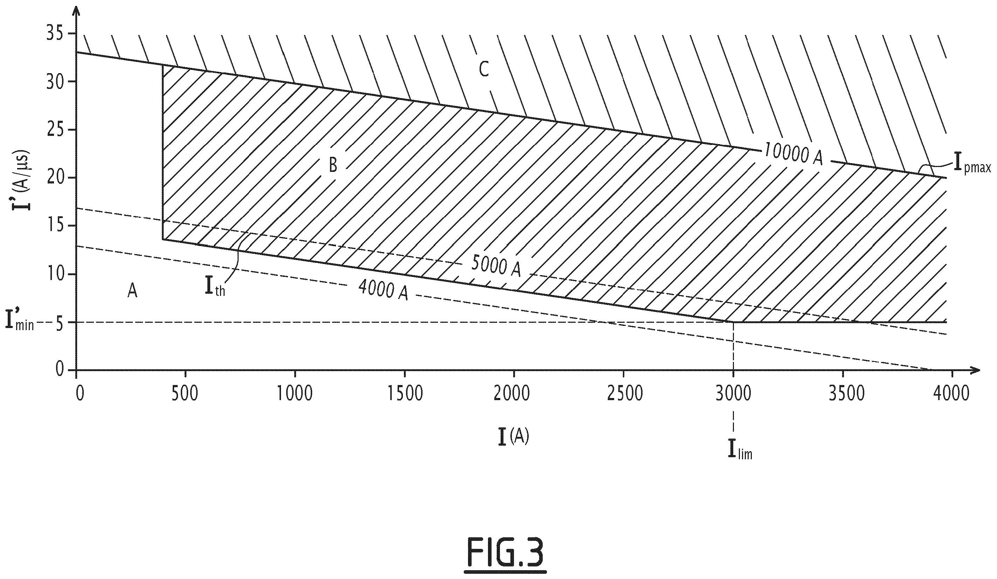

La figure 3 est une représentation graphique de la dérivée I' en fonction de l'intensité I. Le seuil d'intensité pic Iₜₕ est représenté selon un exemple, ainsi que des différentes zones A, B et C de fonctionnement du dispositif 10. Dans l'exemple de la figure 3, le seuil d'intensité pic Iₜₕ vaut 4500 A pour une intensité I comprise entre 400 et 3000 A et ne dépend que de la dérivée I' si l'intensité I est supérieure à 3000 A. Si l'intensité I est inférieure à 400A, quelle que soit la valeur de la dérivée I', et donc quelle que soit la première valeur de l'intensité pic Iₚ₁, l'interrupteur mécanique 12 reste en configuration fermée. Si l'intensité I est comprise entre 250 et 3000 A, le module de commande 34 commande l'interrupteur mécanique 12 en configuration ouverte si la première valeur d'intensité pic estimée Iₚ₁ est supérieure à 4500A. Si l'intensité I est supérieure ou égale à 3000 A, alors le module de commande 34 commande l'interrupteur mécanique 12 en configuration ouverte uniquement si la valeur de la dérivée I' est supérieure à une valeur de dérivée minimale I'ₘᵢₙ, quelle que soit la première valeur de l'intensité pic Iₚ₁. Cette intensité de 3000A, à partir de laquelle la commande de l'interrupteur mécanique 12 ne dépend que de la dérivée I' est dite intensité limite Iₗᵢₘ. De manière générale, si l'intensité I est supérieure ou égale à l'intensité limite Iₗᵢₘ, alors le module de commande 34 commande l'interrupteur mécanique 12 en configuration ouverte uniquement si la valeur de la dérivée l' de l'intensité l est supérieure à la valeur de dérivée minimale I'ₘᵢₙ. En particulier, la valeur de dérivée minimale I'ₘᵢₙ est choisie comme étant relativement faible, par exemple de l'ordre de quelques Ampères par microsecondes, ici 5 A/µs.

Ainsi, la zone A de la figure 3 correspond à des valeurs d'intensité I et de dérivée I' telles que la première valeur d'intensité pic estimée Iₚ₁ est inférieure au seuil d'intensité pic Iₜₕ, et donc, à une zone de fonctionnement de l'interrupteur mécanique 12 en configuration fermée. La zone B correspond à des valeurs d'intensité I et de dérivée I' telles que la première valeur d'intensité pic estimée Iₚ₁ est comprise entre Iₜₕ et Iₚₘₐₓ et la dérivée I' est supérieure à la valeur de dérivée minimale I'ₘᵢₙ, et donc à une zone ou le module de commande 34 commande l'interrupteur mécanique 12 en configuration ouverte. La zone C correspond à une zone interdite, dans laquelle les valeurs d'intensité I traversant le dispositif 10 endommageraient le dispositif 10.

L'utilisation de la première valeur d'intensité estimée Iₚ₁ permet d'éviter un déclenchement du dispositif 10 basé uniquement sur la dérivée I', qui est sujette à des fluctuations brusques sans qu'elles soient pour autant causées par un court-circuit, et qui peuvent être causées par des harmoniques de courant, des perturbations électromagnétiques ou une onde de foudre. En effet, tant que la première valeur d'intensité pic estimée Iₚ₁ est inférieure au seuil d'intensité pic Iₜₕ, l'interrupteur mécanique 12 reste en configuration fermée, laissant ainsi la possibilité à des défauts transitoires, qui ont donc un faible impact sur la valeur de l'intensité I, de disparaître sans déclencher le dispositif 10.

Ainsi, utiliser la première valeur d'intensité estimée Iₚ₁ permet de distinguer les courts-circuits de fluctuations transitoires dues par exemple au démarrage de la charge 5, et permet de gagner du temps par rapport à un déclenchement basé uniquement sur l'intensité I, puisqu'il n'est pas nécessaire d'attendre que l'intensité I dépasse le seuil d'intensité pic Iₜₕ pour que l'interrupteur mécanique 12 bascule en configuration ouverte.

Afin de commander le basculement de l'interrupteur statique 14 en configuration d'isolement et donc couper le courant dans le circuit 1, sans contraindre ou endommager le dispositif, il est nécessaire de s'adapter aux conditions du court-circuit et donc aux valeurs d'intensité I et de dérivée I'.

Pour interrompre le courant de manière sûre, il est nécessaire de s'assurer que, lors du basculement de l'interrupteur statique 14 en configuration d'isolement, l'interrupteur mécanique 12, qui est en configuration ouverte, reste isolant électriquement, autrement dit, ne claque pas. Pour cela, il est nécessaire d'attendre une durée minimale de rétablissement d'une tenue diélectrique de l'interrupteur mécanique 12, à partir du moment où l'interrupteur mécanique 12 bascule en configuration ouverte. Cette durée minimale de rétablissement de la tenue diélectrique de l'interrupteur mécanique 12 dépend en particulier de l'intensité de transfert Iₜᵣ : plus l'intensité de transfert Iₜᵣ est élevée, plus la durée minimale de rétablissement d'une tenue diélectrique de l'interrupteur mécanique 12 est longue.

Selon un mode de réalisation, le module de détermination 32 est configuré pour déterminer l'intensité de transfert Iₜᵣ et en déduire quand commander l'interrupteur statique 14 en configuration ouverte.

Selon un exemple, l'intensité de transfert Iₜᵣ est obtenue directement à partir de la mesure de l'intensité I par le capteur de courant 22, l'intensité de transfert Iₜᵣ étant alors égale à l'intensité I au moment du basculement de l'interrupteur mécanique 12 en position d'ouverture.

Le basculement de l'interrupteur mécanique 12 est par exemple mesuré directement par un capteur de tension, non représenté, une tension aux bornes de l'interrupteur mécanique 12 augmentant lorsque l'interrupteur mécanique 12 bascule en configuration ouverte.

En variante, le basculement de l'interrupteur mécanique 12 en configuration ouverte est estimé à partir du moment où le module de commande 34 émet la commande de basculement pour que l'interrupteur mécanique 12 bascule en configuration ouverte. En particulier, une durée entre l'émission de la commande de basculement et le basculement de l'interrupteur mécanique 12 est connue à l'avance et est par exemple de l'ordre de 50 µs.

En variante, l'intensité de transfert Iₜᵣ est calculée à partir de l'intensité I et la dérivée I' mesurées au moment d'une détection d'un court-circuit, telle que : ${I}_{tr} = I + I ′ \times {T}_{basc}$ où T_{basc} est une durée entre l'émission de la commande de basculement et le basculement de l'interrupteur mécanique 12.

Le module de détermination 32 est configuré pour laisser s'écouler une durée d'isolement Tᵢₛ, s'écoulant à partir du basculement de l'interrupteur mécanique 12 en configuration ouverte, la durée d'isolement Tᵢₛ étant déterminée en fonction de l'intensité de transfert Iₜᵣ. Lorsque la durée d'isolement Tᵢₛ est écoulée, le module de commande 34 commande l'interrupteur statique 14 pour qu'il bascule en configuration d'isolement.

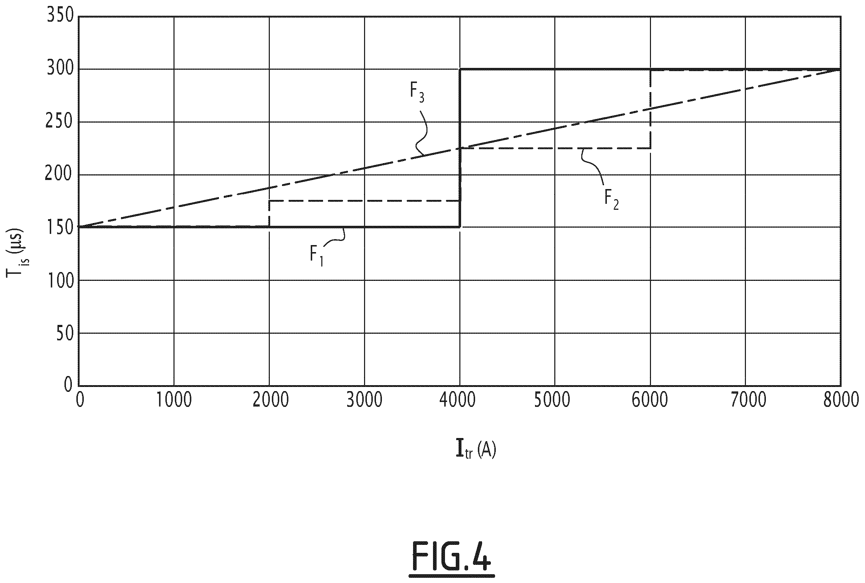

La durée d'isolement Tᵢₛ est supérieure ou égale à la durée minimale de rétablissement de la tenue diélectrique de l'interrupteur mécanique 12. Des exemples de fonctions à partir desquelles la durée d'isolement Tᵢₛ est déterminée sont représentées à la figure 4. La durée d'isolement Tᵢₛ est par exemple déterminée à partir de l'intensité de transfert Iₜᵣ selon une fonction F₁ qui est une fonction constante par morceaux avec une discontinuité à 4000 A, selon une fonction F₂ qui est une fonction constante par morceaux avec une première discontinuité à 2000 A et une deuxième discontinuité à 4000A et une troisième discontinuité à 6000 A, ou encore, selon une fonction F₃ qui est une fonction affine.

Dans le cas où la durée d'isolement Tᵢₛ est déterminée selon la fonction F₁, si l'intensité de transfert Iₜᵣ est inférieure à 4000 A, alors la durée d'isolement Tᵢₛ est égale à 150µs, et sinon, la durée d'isolement Tᵢₛ est égale à 300µs.

De manière particulièrement avantageuse, la durée d'isolement Tᵢₛ tient compte d'un éventuel retard entre une émission de la commande par le module de commande 34 et le basculement de l'interrupteur statique 14 en position d'isolement.

Selon un mode de réalisation alternatif, le module de détermination 32 est configuré pour déterminer une deuxième valeur de l'intensité pic estimée Iₚ₂, en fonction de l'intensité I et de la dérivée l' une fois l'interrupteur mécanique 12 en configuration ouverte. De manière avantageuse, le module de détermination 32 détermine la deuxième valeur de l'intensité pic estimée Iₚ₂ une fois l'interrupteur mécanique 12 en configuration ouverte et lorsqu'une durée de sécurité, égale ou éventuellement supérieure à la durée minimale de rétablissement de la tenue diélectrique de l'interrupteur mécanique 12, est écoulée.

La deuxième valeur de l'intensité pic estimée Iₚ₂ est estimée à partir de l'intensité I et de la dérivée I' mesurées par le module d'acquisition 20 une fois l'interrupteur mécanique 12 en configuration ouverte, selon la formule suivante : ${I}_{p 2} = I + I ′ \times {T}_{ech}$ où T_{ech} est une durée d'échantillonnage prédéterminée.

Si la deuxième valeur de l'intensité pic estimée Iₚ₂ est supérieure ou égale au seuil d'intensité pic Iₜₕ, le module de commande 24 commande le basculement de l'interrupteur statique 14 en configuration d'isolement.

Si la deuxième valeur de l'intensité pic estimée Iₚ₂ est inférieure au seuil d'intensité pic Iₜₕ, l'interrupteur statique 14 ne bascule pas en configuration d'isolement. Le module de contrôle 30 attend l'écoulement de la durée d'échantillonnage T_{ech}, puis calcule à nouveau la deuxième valeur de l'intensité pic estimée Iₚ₂ avec des nouvelles valeurs de l'intensité I et de la dérivée I'.

De manière avantageuse, le module de détermination 32 détermine si une durée maximale Tₘₐₓ s'est écoulé ou non depuis le basculement de l'interrupteur mécanique 12, et le module de commande 34 commande le basculement de l'interrupteur statique 14 en configuration d'isolement si la durée maximale Tₘₐₓ s'est écoulée. Cela permet d'éviter que l'interrupteur statique 14 ne conduise le courant pendant une durée trop importante, ce qui pourrait l'user ou l'endommager, et de s'assurer que le courant est bien interrompu une fois l'interrupteur mécanique 12 en configuration ouverte.

Une fois le courant interrompu, de manière avantageuse, l'unité de contrôle électronique 30, par exemple via le module de commande 34, commande le basculement du sectionneur 18 en configuration ouverte, afin de réaliser une isolation galvanique entre la source 3 de la charge 5.

Tant que la deuxième valeur de l'intensité pic estimée Iₚ₂ est inférieure au seuil d'intensité pic Iₜₕ et que la durée maximale Tₘₐₓ ne s'est pas écoulée, l'interrupteur statique 14 et le dispositif 10 en général, est capable de supporter le courant sans risquer d'être endommagé. Attendre que la deuxième valeur de l'intensité pic estimée Iₚ₂ dépasse le seuil d'intensité pic Iₜₕ permet d'augmenter la durée pendant laquelle le rétablissement de la tenue diélectrique de l'interrupteur 12 a lieu et donc d'augmenter la fiabilité du dispositif 10, sans pour autant que le dispositif 10 soit à risque d'être endommagé. Le dispositif 10 permet donc de s'adapter au type de court-circuit présent : un court-circuit avec augmentation très rapide de l'intensité sera interrompu rapidement, privilégiant une rapidité de réponse du dispositif 10, un court-circuit avec augmentation plus lente de l'intensité sera interrompu plus lentement, privilégiant ainsi la disponibilité du dispositif 10. Cela permet également de limiter des erreurs de prédiction des valeurs des intensités pic estimées Iₚ₁ et Iₚ₂ ou du courant de transfert Iₜᵣ, qui pourraient être causées par des fluctuations imprévues du courant.

En variante non représentée, le courant circulant entre la source 3 et la charge 5 est multiphasé. Dans ce cas, avantageusement, le dispositif de protection 10 comprend plusieurs ensembles, chacun comprenant un interrupteur mécanique 12, un interrupteur statique 14 et un élément limiteur de tension 16 connectés en parallèle les uns aux autres chaque ensemble étant connecté entre la source 3 et la charge 5 sur une phase.

En variante non représentée, la source 3 et la charge 5 sont connectées par un, ou éventuellement plusieurs conducteurs de phases, et un conducteur de neutre. Dans ce cas, de manière avantageuse, le dispositif 10 comprend en outre un sectionneur, connecté en série au conducteur de neutre.

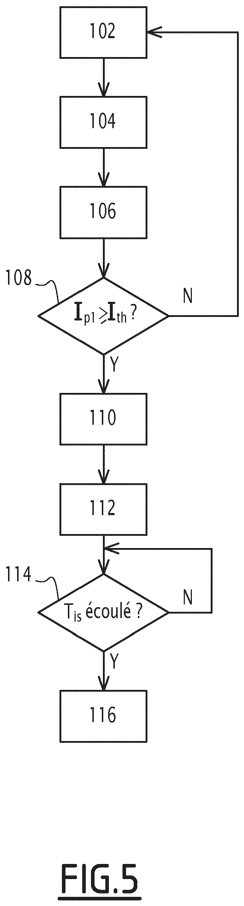

Un procédé de commande du dispositif 10 selon un premier mode de réalisation est décrit ci-dessous, en référence à la figure 5.

Une étape 102 de mesure de l'intensité I est effectuée par le capteur de courant 22.

Une étape 104 de mesure de la dérivée I' est effectuée par le capteur de dérivée d'intensité 24. En variante, l'étape 104 est une étape de détermination de la dérivée I' par le module d'acquisition 20, à partir de l'intensité I.

Une étape 106 de détermination de la première valeur de l'intensité pic estimée Iₚ₁ est effectuée par le module de détermination 32.

Suite à l'étape 106, une étape 108 de comparaison de la première valeur de l'intensité pic estimée Iₚ₁ et du seuil d'intensité pic Iₜₕ est effectuée par le module de détermination 32.

Si la première valeur de l'intensité pic estimée Iₚ₁ est inférieure au seuil d'intensité pic Iₜₕ, le dispositif 10 effectue à nouveau les étapes 102 à 106.

Si la première valeur de l'intensité pic estimée Iₚ₁ est supérieure ou égale au seuil d'intensité pic Iₜₕ, le module de commande 34 commande le basculement de l'interrupteur mécanique 12 en configuration ouverte à l'étape 110.

L'étape 110 ayant été effectuée, une étape 112 de détermination de la durée d'isolement Tᵢₛ est effectuée par le module de détermination 32, la durée d'isolement Tᵢₛ étant obtenue comme décrit précédemment.

Une étape 114 de surveillance est effectuée par le module de détermination 32, pour déterminer si la durée d'isolement Tᵢₛ est écoulée.

L'étape 114 est répétée tant que la durée d'isolement Tᵢₛ n'est pas écoulée.

Lorsque la durée d'isolement Tᵢₛ est écoulée, le module de commande 34 commande l'ouverture de l'interrupteur statique 14 à l'étape 116.

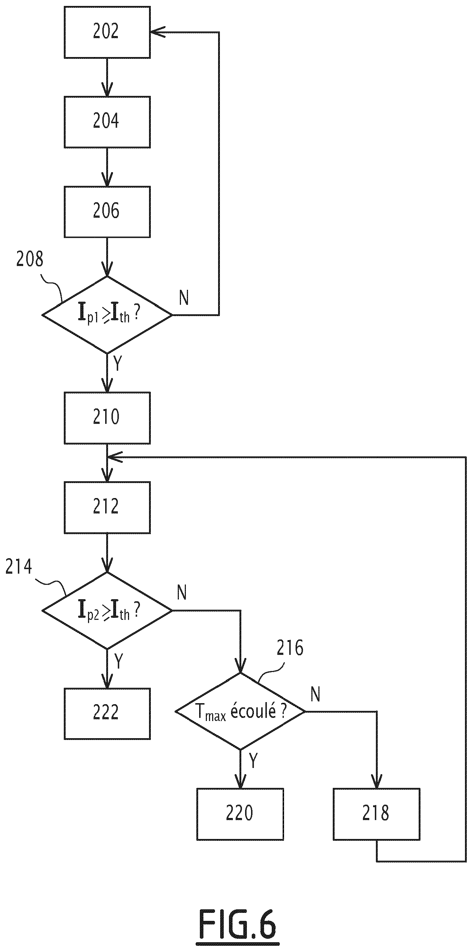

Un procédé de commande du dispositif 10 selon un mode de réalisation alternatif est décrit ci-dessous, en référence à la figure 6.

Les étapes 202 à 210 sont respectivement identiques aux étapes 102 à 110 du procédé de la figure 5 et ne sont pas à nouveau décrites.

L'étape 210 ayant été effectuée et avantageusement, la durée de sécurité s'étant écoulée, une étape 212 de détermination de la deuxième valeur de l'intensité pic estimée Iₚ₂ est effectuée par le module de détermination 32.

Une étape 214 de comparaison de la deuxième valeur de l'intensité pic estimée Iₚ₂ et du seuil d'intensité pic Iₜₕ est réalisée par le module de détermination 32.

Si la deuxième valeur de l'intensité pic estimée Iₚ₂ est inférieure au seuil d'intensité pic Iₜₕ, une étape 216 de vérification de l'écoulement de la durée maximale Tₘₐₓ est effectuée par le module de détermination 32. Si la durée maximale Tₘₐₓ ne s'est pas écoulée, le module de calcul 12 attend la durée d'échantillonnage T_{ech} lors d'une étape 218, puis effectue l'étape 212 à nouveau.

Si la durée maximale Tₘₐₓ s'est écoulée, le module de commande 34 commande le basculement de l'interrupteur statique 14 en configuration d'isolement lors d'une étape 220.

Si la deuxième valeur de l'intensité pic estimée Iₚ₂ est supérieure ou égale au seuil d'intensité pic Iₜₕ, une étape 222 de commande de l'interrupteur statique 14 en configuration d'isolement est réalisée par le module de commande 34.

De manière avantageuse, l'unité de contrôle électronique 30, par exemple via le module de commande 34, commande le basculement du sectionneur 18 en configuration ouverte, afin d'isoler la source 3 de la charge 5 lors d'une étape de commande du sectionneur 18, non représentée.

Toute caractéristique décrite pour un mode de réalisation ou une variante dans ce qui précède peut être mise en œuvre pour les autres modes de réalisation et variantes décrits précédemment, pour autant que techniquement faisable. dispositif 10, un court-circuit avec augmentation plus lente de l'intensité sera interrompu plus lentement, privilégiant ainsi la disponibilité du dispositif 10. Cela permet également de limiter des erreurs de prédiction des valeurs des intensités pic estimées Iₚ₁ et Iₚ₂ ou du courant de transfert Iₜᵣ, qui pourraient être causées par des fluctuations imprévues du courant.

En variante non représentée, le courant circulant entre la source 3 et la charge 5 est multiphasé. Dans ce cas, avantageusement, le dispositif de protection 10 comprend plusieurs ensembles, chacun comprenant un interrupteur mécanique 12, un interrupteur statique 14 et un élément limiteur de tension 16 connectés en parallèle les uns aux autres chaque ensemble étant connecté entre la source 3 et la charge 5 sur une phase.

En variante non représentée, la source 3 et la charge 5 sont connectées par un, ou éventuellement plusieurs conducteurs de phases, et un conducteur de neutre. Dans ce cas, de manière avantageuse, le dispositif 10 comprend en outre un sectionneur, connecté en série au conducteur de neutre.

Un procédé de commande du dispositif 10 selon un premier mode de réalisation est décrit ci-dessous, en référence à la figure 5.

Une étape 102 de mesure de l'intensité I est effectuée par le capteur de courant 22.

Une étape 104 de mesure de la dérivée I' est effectuée par le capteur de dérivée d'intensité 24. En variante, l'étape 104 est une étape de détermination de la dérivée I' par le module d'acquisition 20, à partir de l'intensité I.

Une étape 106 de détermination de la première valeur de l'intensité pic estimée Iₚ₁ est effectuée par le module de détermination 32.

Suite à l'étape 106, une étape 108 de comparaison de la première valeur de l'intensité pic estimée Iₚ₁ et du seuil d'intensité pic Iₜₕ est effectuée par le module de détermination 32.

Si la première valeur de l'intensité pic estimée Iₚ₁ est inférieure au seuil d'intensité pic Iₜₕ, le dispositif 10 effectue à nouveau les étapes 102 à 106.

Si la première valeur de l'intensité pic estimée Iₚ₁ est supérieure ou égale au seuil d'intensité pic Iₜₕ, le module de commande 34 commande le basculement de l'interrupteur mécanique 12 en configuration ouverte à l'étape 110.

L'étape 110 ayant été effectuée, une étape 112 de détermination de la durée d'isolement Tᵢₛ est effectuée par le module de détermination 32, la durée d'isolement Tᵢₛ étant obtenue comme décrit précédemment.

Une étape 114 de surveillance est effectuée par le module de détermination 32, pour déterminer si la durée d'isolement Tᵢₛ est écoulée.

L'étape 114 est répétée tant que la durée d'isolement Tᵢₛ n'est pas écoulée.

Lorsque la durée d'isolement Tᵢₛ est écoulée, le module de commande 34 commande l'ouverture de l'interrupteur statique 14 à l'étape 116.

Un procédé de commande du dispositif 10 selon un mode de réalisation alternatif est décrit ci-dessous, en référence à la figure 6.

Les étapes 202 à 210 sont respectivement identiques aux étapes 102 à 110 du procédé de la figure 5 et ne sont pas à nouveau décrites.

L'étape 210 ayant été effectuée et avantageusement, la durée de sécurité s'étant écoulée, une étape 212 de détermination de la deuxième valeur de l'intensité pic estimée Iₚ₂ est effectuée par le module de détermination 32.

Une étape 214 de comparaison de la deuxième valeur de l'intensité pic estimée Iₚ₂ et du seuil d'intensité pic Iₜₕ est réalisée par le module de détermination 32.

Si la deuxième valeur de l'intensité pic estimée Iₚ₂ est inférieure au seuil d'intensité pic Iₜₕ, une étape 216 de vérification de l'écoulement de la durée maximale Tₘₐₓ est effectuée par le module de détermination 32. Si la durée maximale Tₘₐₓ ne s'est pas écoulée, le module de calcul 12 attend la durée d'échantillonnage T_{ech} lors d'une étape 218, puis effectue l'étape 212 à nouveau.

Si la durée maximale Tₘₐₓ s'est écoulée, le module de commande 34 commande le basculement de l'interrupteur statique 14 en configuration d'isolement lors d'une étape 220.

Si la deuxième valeur de l'intensité pic estimée Iₚ₂ est supérieure ou égale au seuil d'intensité pic Iₜₕ, une étape 222 de commande de l'interrupteur statique 14 en configuration d'isolement est réalisée par le module de commande 34.

De manière avantageuse, l'unité de contrôle électronique 30, par exemple via le module de commande 34, commande le basculement du sectionneur 18 en configuration ouverte, afin d'isoler la source 3 de la charge 5 lors d'une étape de commande du sectionneur 18, non représentée.

## Revendications

1. Dispositif de protection électrique (10), configuré pour être connecté entre une source (3) et une charge (5), le dispositif (10) comprenant :
- un interrupteur mécanique (12), configuré pour basculer entre une configuration fermée, dans laquelle l'interrupteur mécanique (12) conduit un courant circulant entre la source (3) et la charge (12), et une configuration ouverte, dans laquelle l'interrupteur mécanique (12) ne conduit pas le courant;
- un interrupteur statique (14), connecté en parallèle de l'interrupteur mécanique (12), configuré pour basculer entre une configuration de conduction, dans laquelle l'interrupteur statique (14) conduit le courant et une configuration d'isolement, dans laquelle l'interrupteur statique (14) ne conduit pas le courant;
- un élément de limitation de tension (16), connecté en parallèle de l'interrupteur statique (14) et de l'interrupteur mécanique (12);
- un module d'acquisition (20), comprenant un capteur d'intensité (22) configuré pour mesurer une intensité (I) du courant, le module d'acquisition (20) étant en outre configuré pour déterminer une dérivée (I') par rapport au temps de l'intensité du courant (I);
le dispositif (10) étant **caractérisé en ce qu'**il comprend :
- une unité de contrôle électronique (30), configurée pour :
∘ déterminer une première valeur d'une intensité pic estimée (Iₚ₁), en fonction de l'intensité (I) et de la dérivée (I') par rapport au temps de l'intensité (I) ;
∘ commander un basculement de l'interrupteur mécanique (12) en configuration ouverte lorsque la première valeur de l'intensité pic estimée (Iₚ₁) est supérieure ou égale à un seuil d'intensité pic (Iₜₕ) ; l'unité de contrôle électronique (30) étant en outre configurée pour, l'interrupteur mécanique (12) étant en configuration ouverte,
- commander un basculement de l'interrupteur statique (14) en configuration d'isolement lorsqu'une durée d'isolement (Tᵢₛ) est écoulée, ou
- déterminer une deuxième valeur de l'intensité pic estimée (Iₚ₂) en fonction de l'intensité (I) et de la dérivée (I') par rapport au temps de l'intensité (I), et commander le basculement de l'interrupteur statique (14) en configuration d'isolement lorsque la deuxième valeur de l'intensité pic estimée (Iₚ₂) est supérieure ou égale au seuil d'intensité pic (Iₜₕ).

2. Dispositif (10) selon la revendication 1, dans lequel l'unité de contrôle électronique (30) est configurée pour commander, en outre, le basculement de l'interrupteur mécanique (12) en configuration ouverte lorsque l'intensité (I) est supérieure à une intensité limite (Iₗᵢₘ).

3. Dispositif (10) selon l'une quelconque des revendication 1 à 2, dans lequel l'unité de contrôle électronique (30) est configurée en outre pour :
- déterminer une intensité de transfert (Iₜᵣ); et
- déterminer la durée d'isolement (Tᵢₛ), en fonction de l'intensité de transfert (Iₜᵣ).

4. Dispositif (10) selon la revendication 3, dans lequel l'intensité de transfert (Iₜᵣ) est calculée en fonction de l'intensité (I) et de la dérivée (I') par rapport au temps de l'intensité (I).

5. Dispositif (10) selon la revendication 3, dans lequel l'intensité de transfert (Iₜᵣ) est déterminée par une mesure de l'intensité (I) par le module d'acquisition (20).

6. Dispositif (10) selon l'une quelconque des revendication 3 à 5, dans lequel le temps d'isolement (Tᵢₛ) est déterminé en fonction de l'intensité de transfert (Iₜᵣ) par une fonction constante par morceaux (F₁, F₂).

7. Dispositif (10) selon l'une quelconque des revendication 3 à 5, dans lequel le temps d'isolement (Tᵢₛ) est déterminé en fonction de l'intensité de transfert (Iₜᵣ) par une fonction affine (F₃).

8. Dispositif (10) selon l'une quelconque des revendications précédentes, dans lequel le module d'acquisition (20) comprend un capteur de dérivée par rapport au temps de l'intensité (24), configuré pour mesurer la dérivée (I') par rapport au temps de l'intensité (I).

9. Dispositif (10) selon l'une quelconque des revendications précédentes, dans lequel le seuil d'intensité pic (Iₜₕ) est inférieur à 10000 A, de préférence inférieur à 6000A, de préférence égal à 4500A.

10. Procédé de commande d'un dispositif de protection électrique (10) selon l'une quelconque des revendications précédentes, le procédé comprenant au moins les étapes suivantes :
- mesure (102 ; 202) de l'intensité (I) par le module d'acquisition (20) ;
- détermination (104 ; 204) de la dérivée (I') par rapport au temps de l'intensité (I) par le module d'acquisition (20) ;
- détermination (106 ; 206) de la première valeur de l'intensité pic estimée (Iₚ₁), en fonction de l'intensité (I) et de la dérivée (I') par rapport au temps de l'intensité (I) par l'unité de contrôle (30) ;
- si la première valeur de l'intensité pic estimée (Iₚ₁) est supérieure ou égale au seuil d'intensité pic (Iₜₕ), commande (110 ; 210), par l'unité de contrôle électronique (30) du basculement de l'interrupteur mécanique (12) en configuration ouverte ;
- détermination (112) du temps d'isolement (Tᵢₛ) ou détermination (212) de la deuxième valeur de l'intensité pic estimée (Iₚ₂) ; et
- si le temps d'isolement (Tᵢₛ) est écoulé, ou si la deuxième valeur de l'intensité pic estimée (Iₚ₂) est supérieure ou égale au seuil d'intensité pic (Iₜₕ), commande (116 ; 222) par l'unité de contrôle électronique (30) du basculement de l'interrupteur statique (14) en configuration d'isolement.

11. Procédé selon la revendication 10, dans lequel la deuxième valeur de l'intensité pic estimée (Iₚ₂) est déterminée en fonction d'une durée d'échantillonnage (T_{ech}), et, si la deuxième valeur de l'intensité pic estimée (Iₚ₂) est strictement inférieure au seuil d'intensité pic (Iₜₕ), la détermination (212) de la deuxième valeur de l'intensité pic estimée (Iₚ₂) est effectuée à nouveau lorsque la durée d'échantillonnage (T_{ech}) est écoulée.

## Patentansprüche

1. Elektrische Schutzvorrichtung (10), dazu konfiguriert, zwischen eine Quelle (3) und eine Last (5) geschaltet zu werden, wobei die Vorrichtung (10) umfasst:
- einen mechanischen Schalter (12), dazu konfiguriert, zwischen einer geschlossenen Konfiguration, in der der mechanische Schalter (12) einen zwischen der Quelle (3) und der Last (12) fließenden Strom leitet, und einer offenen Konfiguration, in der der mechanische Schalter (12) den Strom nicht leitet, umzuschalten;
- einen statischen Schalter (14), der parallel zu dem mechanischen Schalter (12) geschaltet ist, dazu konfiguriert, zwischen einer Leitungskonfiguration, in der der statische Schalter (14) den Strom leitet, und einer Isolationskonfiguration, in der der statische Schalter (14) den Strom nicht leitet, umzuschalten;
- ein Spannungsbegrenzungselement (16), das parallel zu dem statischen Schalter (14) und zu dem mechanischen Schalter (12) geschaltet ist;
- ein Erfassungsmodul (20), umfassend einen Stromstärkesensor (22), der dazu konfiguriert ist, eine Stromstärke (I) des Stroms zu messen, wobei das Erfassungsmodul (20) ferner dazu konfiguriert ist, eine Ableitung (I') nach der Zeit der Stromstärke des Stroms (I) zu bestimmen;
wobei die Vorrichtung (10) **dadurch gekennzeichnet ist, dass** sie umfasst:
- eine elektronische Steuereinheit (30), die dazu konfiguriert ist:
∘ einen ersten Wert einer geschätzten Spitzenstromstärke (Iₚ₁) in Abhängigkeit von der Stromstärke (I) und von der Ableitung (I') nach der Zeit der Stromstärke (I) zu bestimmen;
∘ ein Umschalten des mechanischen Schalters (12) in die offene Konfiguration zu steuern, wenn der erste Wert der geschätzten Spitzenstromstärke (Iₚ₁) größer als oder gleich einer Spitzenstromstärkenschwelle (Iₜₕ) ist;
wobei die elektronische Steuereinheit (30) ferner dazu konfiguriert ist, wenn sich der mechanische Schalter (12) in der offenen Konfiguration befindet,
- ein Umschalten des statischen Schalters (14) in die Isolationskonfiguration zu steuern, wenn eine Isolationsdauer (Tᵢₛ) abgelaufen ist, oder
- einen zweiten Wert der geschätzten Spitzenstromstärke (Iₚ₂) in Abhängigkeit von der Stromstärke (I) und von der Ableitung (I') nach der Zeit der Stromstärke (I) zu bestimmen, und das Umschalten des statischen Schalters (14) in die Isolationskonfiguration zu steuern, wenn der zweite Wert der geschätzten Spitzenstromstärke (Iₚ₂) größer als oder gleich der Spitzenstromstärkenschwelle (Iₜₕ) ist.

2. Vorrichtung (10) nach Anspruch 1, wobei die elektronische Steuereinheit (30) dazu konfiguriert ist, ferner das Umschalten des mechanischen Schalters (12) in die offene Konfiguration zu steuern, wenn die Stromstärke (I) größer ist als eine Grenzstromstärke (Iₗᵢₘ).

3. Vorrichtung (10) nach einem der Ansprüche 1 bis 2, wobei
die elektronische Steuereinheit (30) ferner dazu konfiguriert ist:
- eine Transferstromstärke (Iₜᵣ) zu bestimmen; und
- die Isolationsdauer (Tᵢₛ) in Abhängigkeit von der Transferstromstärke (Iₜᵣ) zu bestimmen.

4. Vorrichtung (10) nach Anspruch 3, wobei die Transferstromstärke
(Iₜᵣ) in Abhängigkeit von der Stromstärke (I) und von der Ableitung (I') nach der Zeit der Stromstärke (I) berechnet wird.

5. Vorrichtung (10) nach Anspruch 3, wobei die Transferstromstärke
(Iₜᵣ) durch eine Messung der Stromstärke (I) durch das Erfassungsmodul (20) bestimmt wird.

6. Vorrichtung (10) nach einem der Ansprüche 3 bis 5, wobei
die Isolationszeit (Tᵢₛ) in Abhängigkeit von der Transferstromstärke (Iₜᵣ) durch eine stückweise konstante Funktion (F₁, F₂) bestimmt wird.

7. Vorrichtung (10) nach einem der Ansprüche 3 bis 5, wobei
die Isolationszeit (Tᵢₛ) in Abhängigkeit von der Transferstromstärke (Iₜᵣ) durch eine affine Funktion (F₃) bestimmt wird.

8. Vorrichtung (10) nach einem der vorhergehenden Ansprüche,
wobei das Erfassungsmodul (20) einen Sensor für die Ableitung nach der
Zeit der Stromstärke (24) umfasst, der dazu konfiguriert ist, die Ableitung (I') nach der Zeit der
Stromstärke (I) zu messen.

9. Vorrichtung (10) nach einem der vorhergehenden Ansprüche,
wobei die Spitzenstromstärkenschwelle (Iₜₕ) kleiner als 10000 A, vorzugsweise kleiner als 6000 A, vorzugsweise gleich 4500 A ist.

10. Verfahren zur Steuerung einer elektrischen Schutzvorrichtung (10) nach
einem der vorhergehenden Ansprüche, wobei das Verfahren mindestens die folgenden Schritte umfasst:
- Messen (102 ; 202) der Stromstärke (I) durch das Erfassungsmodul (20) ;
- Bestimmen (104 ; 204) der Ableitung (I') nach der Zeit der Stromstärke (I) durch das Erfassungsmodul (20) ;
- Bestimmen (106 ; 206) des ersten Werts der geschätzten Spitzenstromstärke (Iₚ₁),
in Abhängigkeit von der Stromstärke (I) und von der Ableitung (I') nach der Zeit der Stromstärke
(I) durch die Steuereinheit (30) ;
- wenn der erste Wert der geschätzten Spitzenstromstärke (Iₚ₁) größer als oder gleich der Spitzenstromstärkenschwelle (Iₜₕ) ist, Steuerung (110 ; 210), durch die elektronische Steuereinheit (30) des Umschaltens des mechanischen Schalters (12) in die offene Konfiguration;
- Bestimmung (112) der Isolationszeit (Tᵢₛ) oder Bestimmung (212) des zweiten Werts der geschätzten Spitzenstromstärke (Iₚ₂) ; und
- wenn die Isolationszeit ((Tᵢₛ) abgelaufen ist, oder wenn der zweite Wert der geschätzten Spitzenstromstärke (Iₚ₂) größer als oder gleich der Spitzenstromstärkenschwelle (Iₜₕ) ist, Steuerung (116 ; 222) durch die elektronische Steuereinheit (30) des Umschaltens des statischen Schalters (14) in die Isolationskonfiguration.

11. Verfahren nach Anspruch 10, wobei der zweite Wert der geschätzten Spitzenstromstärke (Iₚ₂) in Abhängigkeit von einer Abtastdauer (T_{ech}) bestimmt wird, und, wenn der zweite Wert der geschätzten Spitzenstromstärke (Iₚ₂) streng kleiner als die Spitzenstromstärkenschwelle (Iₜₕ) ist, die Bestimmung (212) des zweiten Werts der geschätzten Spitzenstromstärke (Iₚ₂) erneut durchgeführt wird, wenn die Abtastdauer (T_{ech}) abgelaufen ist.

## Claims

1. An electrical protection device (10), configured so as to be connected between a source (3) and a load (5), the device (10) comprising:
- a mechanical switch (12), configured so as to switch between a closed configuration, wherein the mechanical switch (12) conducts a current flowing between the source (3) and the load (12), and an open configuration, wherein the mechanical switch (12) does not conduct the current;
- a static switch (14), connected in parallel with the mechanical switch (12), configured so as to switch between a conduction configuration, wherein the static switch (14) conducts the current, and an isolation configuration, wherein the static switch (14) does not conduct the current;
- a voltage limiting element (16), connected in parallel with the static switch (14) and the mechanical switch (12);
- an acquisition module (20), comprising a current intensity sensor (22) configured so as to measure the intensity (I) of the current, the acquisition module (20) being further configured so as to determine a derivative (I') with respect to time (time derivative) of the current intensity (I);
the device (10) being **characterised in that** it comprises:
- an electronic control unit (30), configured so as to:
∘ determine a first value of an estimated peak current intensity (Iₚ₁), as a function of the current intensity (I) and the time derivative (I') of current intensity (I);
∘ command a switching of the mechanical switch (12) to the open configuration when the first value of the estimated peak current intensity (Iₚ₁) is greater than or equal to a peak current intensity threshold value (Iₜₕ);
with the mechanical switch (12) being in the open configuration, the electronic control unit (30) being further configured so as to:
- command the switching of the static switch (14) to the isolation configuration when an isolation time period (Tᵢₛ) has elapsed; or
- determine a second value of the estimated peak current intensity (Iₚ₂) as a function of the current intensity (I) and the time derivative (I') of current intensity (I), and command the switching of the static switch (14) to the isolation configuration when the second value of the estimated peak current intensity (Iₚ₂) is greater than or equal to the peak current intensity threshold value (Iₜₕ).

2. A device (10) according to claim 1, wherein the electronic control unit (30) is configured so as to command, in addition, the switching of the mechanical switch (12) to the open configuration when the current (I) is greater than a current intensity limit (Ilim).

3. A device (10) according to any one of claims 1 to 2, wherein the electronic control unit (30) is further configured so as to:
- determine a transfer current intensity (Iₜᵣ); and
- determine the isolation time period (Tᵢₛ), as a function of the transfer current intensity (Iₜᵣ).

4. A device (10) according to claim 3, wherein the transfer current intensity (Iₜᵣ) is calculated as a function of the current intensity (I) and the time derivative (I') of the current intensity (I).

5. A device (10) according to claim 3, wherein the transfer current intensity (Iₜᵣ) is determined by means of measuring of the current intensity (I) by the acquisition module (20).

6. A device (10) according to any one of claims 3 to 5, wherein the isolation time period (Tᵢₛ) is determined as a function of the transfer current intensity (Iₜᵣ) by means of a piecewise constant function (F₁, F₂).

7. A device (10) according to any one of claims 3 to 5, wherein the isolation time period (Tᵢₛ) is determined as a function of the transfer current intensity (Iₜᵣ) by an affine function (F₃).

8. A device (10) according to any one of the preceding claims, wherein the acquisition module (20) comprises a sensor for the time derivative of current intensity (24), configured so as to measure the time derivative (I') of current intensity (I).

9. A device (10) according to any one of the preceding claims, wherein the peak current intensity threshold value (Iₜₕ) is lower than 10,000 A, preferably lower than 6,000 A, more preferably equal to 4,500 A.

10. A control method for controlling an electrical protection device (10) according to any one of the preceding claims, the method comprising at least the following steps:
- measuring (102; 202) the current intensity (I) by the acquisition module (20);
- determining (104; 204) the time derivative (I') of current intensity (I) by the acquisition module (20);
- determining (106; 206) the first value of the estimated peak current intensity (Iₚ₁), as a function of the current intensity (I) and of the time derivative (I') of current intensity (I) by the control unit (30);
- if the first value of the estimated peak current intensity (Iₚ₁) is greater than or equal to the peak current intensity threshold value (Iₜₕ), commanding (110; 210), by the electronic control unit (30), the switching of the mechanical switch (12) to the open configuration;
- determining (112) the isolation time period (Tᵢₛ) or determining (212) the second value of the estimated peak current intensity (Iₚ₂); and
- if the isolation time period (Tᵢₛ) has elapsed, or if the second value of the estimated peak current intensity (Iₚ₂) is greater than or equal to the peak current intensity threshold value (Iₜₕ), commanding (116; 222), by the electronic control unit (30), the switching of the static switch (14) to the isolation configuration.

11. A method according to claim 10, wherein the second value of the estimated peak current intensity (Iₚ₂) is determined as a function of a sampling time (T_{ech}), and, if the second value of the estimated peak current intensity (Iₚ₂) is strictly lower than the peak current intensity threshold value (Iₜₕ), the determining (212) of the second value of the estimated peak current intensity (Iₚ₂) is performed again when the sampling time (T_{ech}) has elapsed.
